# EUROPEAN PATENT APPLICATION

(11) **EP 4 745 065 A1**
(43) Date of publication of application: **20.05.2026**
(21) Application number: 25747874.3
(22) Date of filing: 24.01.2025
(51) Int. Cl.: B65G 54/02

(54) **TRACK-SWITCHING STATOR AND MAGNETIC DRIVE CONVEYING SYSTEM HAVING SAME**

(30) Priority: 31.01.2024 CN 202410140121
(71) Applicant: Shanghai Golytec Automation Co., Ltd., Shanghai 201100 (CN)
(72) Inventor: CHI, Feng, Shanghai 201100 (CN); GUO, Lin, Shanghai 201100 (CN); CHEN, Zenghui, Shanghai 201100 (CN); YANG, Tao, Shanghai 201100 (CN)
(74) Representative: Huang, Liwei
(86) International application number: PCT/CN2025/074906
(87) International publication number: WO 2025/162306

(57) **Abstract**

A track switching stator and a magnetic drive conveying system with the same are disclosed. The track-switching stator has a converging end, a first diverging end and a second diverging end, and includes: a base; a first conveying track, located between the converging end and the first diverging end and includes a first armature winding to drive a mover to move between the converging end and the first diverging end; a second conveying track, located between the converging end and the second diverging end and includes a second armature winding to drive the mover to move between the converging end and the second diverging end; and a switching structure, including a first guiding member and a second guiding member, the first guiding member defining a first slot in which a first retractable member capable of being extended and retracted is arranged, the first retractable member guiding the mover to move from the converging end to the second diverging end, the second guiding member defining a second slot in which a second retractable member capable of being extended and retracted is arranged, and the second retractable member guiding the mover to move from the converging end to the first diverging end. The track switching stator assists the mover in switching through direct contact with the mover, thereby increasing the switching speed.

## Description

### CROSS-REFERENCE TO RELATED APPLICATIONS

This application claims priority to Chinese Patent Application No. CN202410140121.X, entitled "TRACK SWITCHING STATOR AND MAGNETIC DRIVE CONVEYING SYSTEM WITH SAME", filed with the China National Intellectual Property Administration on January 31, 2024, the entire contents of which are hereby incorporated by reference.

### TECHNICAL FIELD

The present disclosure relates to the technical field of magnetic drive conveying systems, and in particular, to a track switching stator and a magnetic drive conveying system with the same.

### BACKGROUND

The use of the magnetic levitation technology for workpiece conveying offers characteristics such as high conveying speed, low maintenance cost, and high flexibility, gaining favor with an increasing number of customers. In application scenario of magnetic levitation conveying lines, there is often a need for divergence of a single track or confluence of a plurality of tracks.

In related technologies, a separate transfer mechanism, such as a turntable or a horizontal moving platform, is arranged to first connect with a guide rail outputting a workpiece. Once the workpiece is moved onto the transfer mechanism, the transfer mechanism turns or moves to connect with a guide rail inputting the workpiece, so as to transfer the workpiece from the output guide rail to the input guide rail. During this process, the transfer mechanism needs to connect with the output guide rail and the input guide rail respectively, and the connection speed is lower, which significantly affects the conveying efficiency of the conveying line.

In some other technologies, a magnetic device is arranged on a side surface to achieve the switching of a mover. However, the switching speed of magnetic attraction is also lower.

### SUMMARY

The objective of the present disclosure is to provide a track switching stator and a magnetic drive conveying system with the same. The track switching stator can assist a mover in switching on the track switching stator through direct contact with the mover, thereby improving the smoothness of movement of the mover and increasing the switching speed.

To achieve the above objective, in a first aspect, an embodiment of the present disclosure provides a track switching stator applied to a magnetic drive conveying system. The track switching stator has a converging end, a first diverging end and a second diverging end and includes: a base; a first conveying track, disposed on the base, located between the converging end and the first diverging end, and including a first armature winding configured to drive a mover of the magnetic drive conveying system to move between the converging end and the first diverging end; a second conveying track, disposed on the base, located between the converging end and the second diverging end, and including a second armature winding configured to drive the mover to move between the converging end and the second diverging end; and a switching structure, including a first guiding member and a second guiding member, where the first guiding member defines a first slot, or the first guiding member and first conveying track jointly define the first slot, a first retractable member capable of being extended and retracted is disposed in the first slot, the first retractable member, when lifted, acts on the mover through contact with the mover to guide the mover to move from the converging end to the second conveying track, the second guiding member defines a second slot, or the second guiding member and the second conveying track jointly define the second slot, a second retractable member capable of being extended and retracted is disposed in the second slot, and the second retractable member, when lifted, acts on the mover through contact with the mover to guide the mover to move from the converging end to the first conveying track.

In a second aspect, an embodiment of the present disclosure provides a magnetic drive conveying system, including the track switching stator according to the embodiment in the first aspect of the present disclosure; and a mover, provided with a permanent magnet array and retractable universal wheels, where the retractable universal wheels can be extended and retracted relative to the mover, and the switching structure guides the mover to move from the converging end to the first conveying track or guides the mover to move from the converging end to the second conveying track by adjusting the extended and retracted states of the retractable universal wheels; and the first armature winding, when energized, is magnetically coupled to the permanent magnet array to drive the mover to move between the converging end and the first diverging end, and the second armature winding, when energized, is magnetically coupled to the permanent magnet array to drive the mover to move between the converging end and the second diverging end.

The track switching stator for the magnetic drive conveying system according to the present disclosure is provided with the first retractable member and the second retractable member that can be extended and retracted, and applies an acting force to the mover through direct contact with the mover to assist the mover in switching on the track switching stator. Compared with magnetic coupling or other non-contact means to act on the mover, this approach provides a more reliable application of force to the mover, thereby improving the smoothness of movement of the mover and increasing the switching speed of the mover.

### BRIEF DESCRIPTION OF THE DRAWINGS

To more clearly explain the technical solutions in the embodiments of the present disclosure or the prior art, a brief description of the accompanying drawings used in the embodiments of the present disclosure or the prior art will be provided below. Obviously, the accompanying drawings in the following description are merely some embodiments of the present disclosure. Those of ordinary skill in the art may obtain other drawings according to these drawings without creative labor.
FIG. 1 is a schematic structural diagram of a magnetic drive conveying system according to an embodiment of the present disclosure.
FIG. 2 is a partially enlarged view of an area A in FIG. 1.
FIG. 3 is a first schematic structural diagram of a track switching stator according to an embodiment of the present disclosure.
FIG. 4 is a second schematic structural diagram of the track switching stator according to an embodiment of the present disclosure.
FIG. 5 is a third schematic structural diagram of the track switching stator according to an embodiment of the present disclosure.
FIG. 6 is a fourth schematic structural diagram of the track switching stator according to an embodiment of the present disclosure.
FIG. 7 is a schematic structural diagram of a mover according to an embodiment of the present disclosure.
FIG. 8 is a schematic structural diagram of two track switching stators spliced together according to an embodiment of the present disclosure.

### Description of reference numerals:

1, track switching stator; 2, mover; 3 magnetic drive conveying system; 4, track stator; 5, conveying track; 6, permanent magnet array;
100, base; 101, converging end; 102, first diverging end; 103, second diverging end; 104, third diverging end;
200, first conveying track; 210, first armature winding;
300, second conveying track; 310, second armature winding;
410, first guiding member; 411, first slot; 412, first stop shoulder; 413, first abutment shoulder; 420, second guiding member; 421, second slot; 422, second stop shoulder; 423, second abutment shoulder; 430, first retractable member; 431, first guiding surface; 440, second retractable member; 441, second guiding surface; 460, third guiding member; 461, third slot; 462, third stop shoulder; 463, third abutment shoulder; 464, third guiding surface; 470, fourth retractable member; 480, fifth retractable member; 490, sixth retractable member;
610, first sliding member; 620, second sliding member;
700, third conveying track; 710, third armature winding; 720, fourth guiding member; 721, fourth stop shoulder; 722, fourth abutment shoulder; 730, fourth slot; 731, third retractable member;
810, first connection slot; 820, second connection slot; 821, fourth guiding surface; 830, first end; 840, second end.

The implementation of the objectives, functional features and advantages of the present disclosure are further described below with reference to the embodiments and accompanying drawings.

### DETAILED DESCRIPTION OF THE EMBODIMENTS

To make the objectives, technical solutions and advantages of the present disclosure clearer, the following detailed description will be given to implementations of the present disclosure with reference to the accompanying drawings.

When the following description involves the accompanying drawings, unless otherwise indicated, the same numerals in different accompanying drawings represent the same or similar elements. The implementations described in the following embodiments do not represent all implementations consistent with the present disclosure. On the contrary, they are merely examples of devices and methods consistent with certain aspects of the present disclosure, as detailed in the appended claims.

In the description of the present disclosure, it should be understood that terms such as "first" and "second" are merely for descriptive purposes and cannot be construed as indicating or implying relative importance. Those of ordinary skill in the art can understand the specific meanings of the aforementioned terms in the present disclosure according to specific conditions. In addition, in the description of the present disclosure, unless otherwise specified, "a plurality of" refers to two or more. The term "and/or" describes the relationships between associated objects, indicates that there may be three relationships. For example, A and/or B may indicate that: A exists alone, both A and B exist, or B exists alone. The character "/" generally indicates that the associated objects before and after are in an "or" relationship.

Unless otherwise defined, all technical and scientific terms used herein have the same meanings as commonly understood by those skilled in the art to which the present disclosure belongs. The terms used in the specification are merely for the purpose of describing specific embodiments and are not intended to limit the present disclosure. The term "and/or" used herein indicates any and all combinations of one or more related listed items.

A magnetic drive conveying system generally includes a mover and a stator. One of the mover and the stator is provided with a coil, and the other one is provided with a permanent magnet. By exciting the coil with a current to generate a traveling wave magnetic field, the traveling wave magnetic field is magnetically coupled to the permanent magnet to enable the mover to move relative to the stator. Moreover, arranging a carrier on the mover to achieve the conveying function.

In an application scenario of the magnetic drive conveying system, there is often a need for divergence of a single track or confluence of a plurality of tracks. In some technologies, a magnetic attraction device is arranged on a side surface of the mover to achieve the switching of the mover. Since the magnetic attraction device applies an acting force to the mover through magnetic coupling, the precision of the acting force applied by magnetic coupling is low and easily affected by an environment, leading to slower switching speed.

In a magnetic drive conveying system 3 of the present disclosure, a track switching stator 1 is provided with a first retractable member 430 and a second retractable member 440 that can be extended and retracted. An acting force is applied to a mover 2 through direct contact with the mover 2 to assist the mover 2 in switching on the track switching stator 1. Compared to magnetic coupling or other non-contact means to apply an acting force to the mover 2, the acting force applied by the track switching stator 1 to the mover 2 is more reliable and stable, thereby improving the smoothness of movement of the mover 2 and increasing the switching speed of the mover 2.

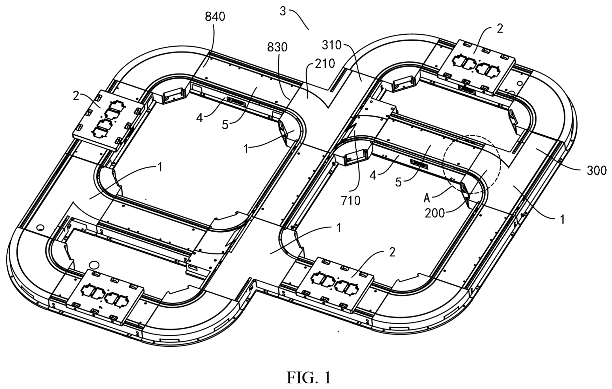

As shown in FIG. 1, the magnetic drive conveying system 3 in the embodiment of the present disclosure includes the mover 2 and the track switching stator 1.

In the present disclosure, by applying the track switching stator 1 in the magnetic drive conveying system 3, the divergence of a single track and confluence of a plurality of tracks be achieved. An acting force is applied to the mover 2 through direct contact with the mover 2 to assist the mover 2 in switching on the track switching stator 1. Compared to magnetic coupling or other non-contact means to apply an acting force to the mover 2, the acting force applied by the track-switching stator 1 to the mover 2 is more reliable and stable, thereby improving the smoothness of movement of the mover 2 and increasing the switching speed of the mover 2.

The track switching stator 1 according to the embodiment of the present disclosure is described below in conjunction with the accompanying drawings.

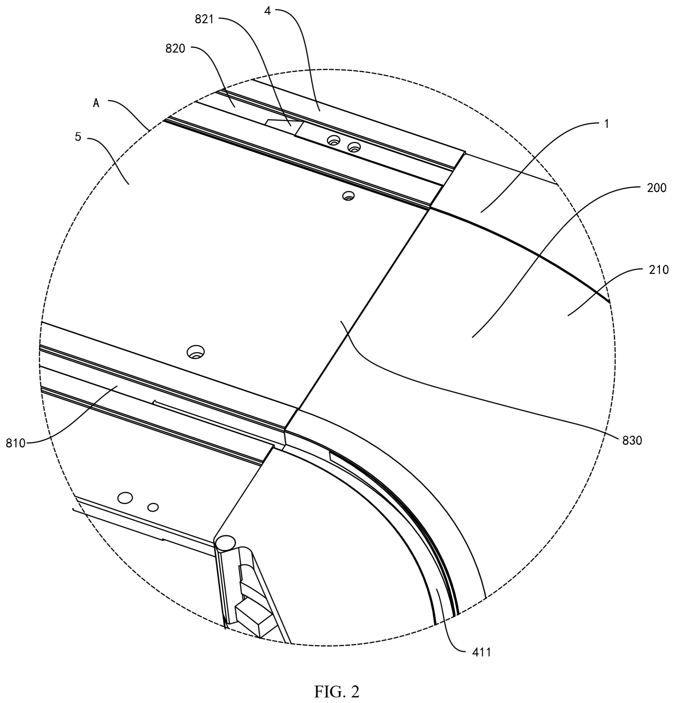

As shown in FIGS. 2-6, the track switching stator 1 according to the embodiment of the application is applied to the magnetic drive conveying system 3. The track switching stator 1 has a converging end 101, a first diverging end 102 and a second diverging end 103. The track switching stator 1 includes a base 100, a first conveying track 200, a second conveying track 300 and a switching structure.

The first conveying track 200, the second conveying track 300 and the switching structure are arranged on the base 100 to fix relative positions of the first conveying track 200, the second conveying track 300 and the switching structure, ensuring the conveying stability.

The first conveying track 200 is located between the converging end 101 and the first diverging end 102, and includes a first armature winding 210. The first armature winding 210 is configured to drive the mover 2 of the magnetic drive conveying system 3 to move between the converging end 101 and the first diverging end 102.

The second conveying track 300 is arranged on the base 100, located between the converging end 101 and the second diverging end 103, and includes a second armature winding 310. The second armature winding 310 is configured to drive the mover 2 to move between the converging end 101 and the second diverging end 103.

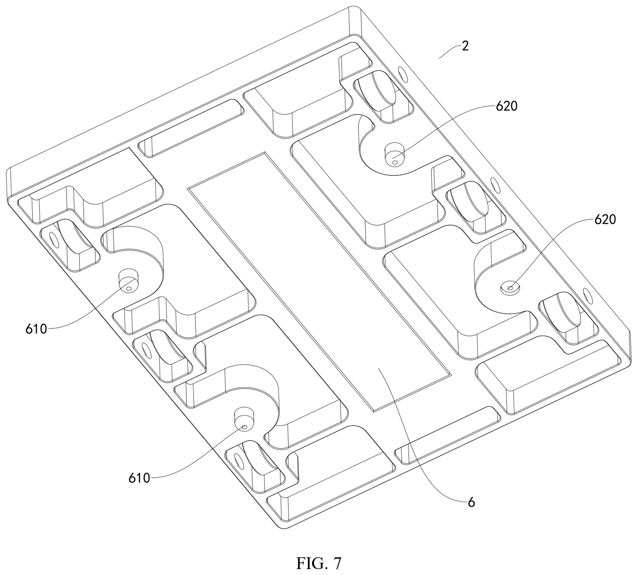

Specifically, as shown in FIG. 7, a permanent magnet array 6 is disposed on a surface of the mover 2 facing the track switching stator 1, and the permanent magnet array 6 generates a constant magnetic field on the periphery of the mover 2. For example, the mover 2 is located above the track switching stator 1, and the permanent magnet array 6 is arranged on a lower surface of the mover 2. The permanent magnet array 6 moves under the action of current excitation of the first armature winding 210 (or the second armature winding 310).

In the track switching stator 1 according to the embodiment of the application, the base 100 is arranged, which can be configured to support the first conveying track 200, the second conveying track 300 and the switching structure.

When the mover 2 moves on the first conveying track 200, the first armature winding 210 is periodically energized in a phase sequence to generate a changing traveling wave magnetic field, and the constant magnetic field of the permanent magnet array 6 is magnetically coupled to the traveling wave magnetic field of the first armature winding 210 to drive the mover 2 to move from the first diverging end 102 to the converging end 101 or to move from the converging end 101 to the first diverging end 102. By changing the energizing sequence direction of the first armature winding 210, the direction of a driving force received by the mover 2 can be changed, thereby changing the movement direction of the mover 2.

When the mover 2 moves on the second conveying track 300, the second armature winding 310 is periodically energized in a phase sequence to generate a changing traveling wave magnetic field, and the constant magnetic field of the permanent magnet array 6 is magnetically coupled to the traveling wave magnetic field of the second armature winding 310 to drive the mover 2 to move from the second diverging end 103 to the converging end 101 or to move from the converging end 101 to the second diverging end 103. By changing the energizing sequence direction of the second armature winding 310, the direction of a driving force received by the mover 2 can be changed, thereby changing the movement direction of the mover 2.

In the embodiment of the present disclosure, the first conveying track 200 and the second conveying track 300 are connected to each other, an angle is formed between center lines of the first conveying track 200 and the second conveying track 300 and is greater than 0° and not greater than 90°. For example, the angle is 30°, 45°, 60°, 75° or 90°.

The shapes of the first conveying track 200 and the second conveying track 300 may be adjusted adaptively based on usage. For example, the center lines of the first conveying track 200 and the second conveying track 300 both are straight lines; or, one of the center lines of the first conveying track 200 and the second conveying track 300 is a straight line, and the other one is a curved line; or, the center lines of the first conveying track 200 and the second conveying track 300 both are curved lines.

In addition, the mover 2 has a first sliding member 610 and a second sliding member 620.

The first sliding member 610 and the second sliding member 620 may be unidirectional limiting structures such as rollers or sliders. The unidirectional limiting structure refers to a structure that has a single fixed rotation direction or movement direction. In this case, if the direction of the driving force of the armature windings is not parallel to the movement direction of the mover 2, the driving force of the armature windings may be insufficient to drive the mover 2 to change the conveying direction.

The first sliding member 610 and the second sliding member 620 may also be multidirectional limiting structures such as universal wheels. The multidirectional limiting structure refers to a structure that has unspecified movement directions. In this case, the driving force of the armature windings is sufficient to drive the mover 2 to change the conveying direction; however, if the direction of the driving force of the armature windings is not parallel to an original preset trajectory of the mover 2, the mover 2 may deviate from the preset movement trajectory.

In the present disclosure, the track switching stator 1 is provided with the switching structure. The switching structure includes a first guiding member 410 and a second guiding member 420. The first guiding member 410 defines a first slot 411, or the first guiding member 410 and the first conveying track 200 jointly define the first slot 411. The second guiding member 420 defines a second slot 421, or the second guiding member 420 and the second conveying track 300 jointly define the second slot 421.

When the mover 2 moves along the first conveying track 200, the first sliding member 610 is slidably disposed in the first slot 411, and the first slot 411 can guide and limit the movement of the first sliding member 610 to define relative positions of the mover 2 and the first conveying track 200, preventing the mover 2 from detaching from the first conveying track 200 and ensuring a larger driving force generated by magnetic coupling between the first armature winding 210 and the permanent magnet 6, which effectively uses the traveling wave magnetic field of the first armature winding 210.

When the mover 2 moves along the second conveying track 300, the second sliding member 620 is slidably disposed in the second slot 421, and the second slot 421 can guide and limit the movement of the second sliding member 620 to define relative positions of the mover 2 and the second conveying track 300, preventing the mover 2 from detaching from the second conveying track 300 and ensuring a larger driving force generated by magnetic coupling between the second armature winding 310 and the permanent magnet array 6, which effectively uses the traveling wave magnetic field of the second armature winding 310.

In addition, a first retractable member 430 that can be extended and retracted is disposed in the first slot 411 (the first retractable member 430 extends and retracts in a depth direction of the first slot 411), and the first retractable member 430, when lifted, acts on the mover 2 through contact with the mover 2 to guide the mover 2 to move from the converging end 101 to the second conveying track 300. The second retractable member 440 that can be extended and retracted is disposed in the second slot 421 (the second retractable member 440 extends and retracts in a depth direction of the second slot 421), and the second retractable member 440, when lifted, acts on the mover 2 through contact with the mover 2 to guide the mover 2 to move from the converging end 101 to the first conveying track 200.

The first sliding member 610 and the second sliding member 620 can be extended and retracted relative to the mover 2.

When the mover 2 moves from the converging end 101 to the first diverging end 102, the first retractable member 430 is in a descended state, the first sliding member 610 remains in the first slot 411, the second retractable member 440 is in a lifted state, causing the second sliding member 620 to retract under the action of the second retractable member 440 and to disengage from the second slot 421. This allows the mover 2 to be free from the limitation and guidance of the second slot 421. Since the first sliding member 610 is limited and guided by the first slot 411, the mover 2 moves along the first conveying track 200.

When the mover 2 moves from the converging end 101 to the second diverging end 103, the second retractable member 440 is in a descended state, at this moment, the second sliding member 620 remains in the second slot 421, the first retractable member 430 is in a lifted state, causing the first sliding member 610 to retract under the action of the first slot 411 and to disengage from the first slot 411. This allows the mover 2 to be free from the limitation and guidance of the first slot 411. Since the second sliding member 620 is limited and guided by the second slot 421, the mover 2 moves along the second conveying track 300.

For the unidirectional limiting structures, the first retractable member 430, the second retractable member 440, the first slot 411 and the second slot 421 work together to provide additional guidance and limitation, to drive the mover 2 to change the conveying direction in coordination with the driving force of the armature windings.

For the multidirectional limiting structures, the first retractable member 430, the second retractable member 440, the first slot 411 and the second slot 421 work together to assist the mover 2 in changing the conveying direction, thereby ensuring that the mover 2 maintains along the preset movement trajectory.

In addition, compared to applying an acting force to the mover 2 in a non-contact manner, the first retractable member 430 and the second retractable member 440 apply an acting force to the mover 2 through contact with the mover 2. This results in a sustained, stable and accurate force acting on the mover 2, thereby improving the reliability of its movement and increasing the switching speed of the mover 2.

It thus cab be seen that the track switching stator 1 in the embodiment of the present disclosure drives the mover 2 to change the movement direction by employing a method primarily driven by the armature windings, supplemented by direct contact. This provides more reliable guidance and limitation during the switching process with increasing the driving force, allowing for quicker and more stable switching of the mover 2. The movement trajectory of the mover 2 aligns with expectations, reducing the likelihood of the mover 2 derailing.

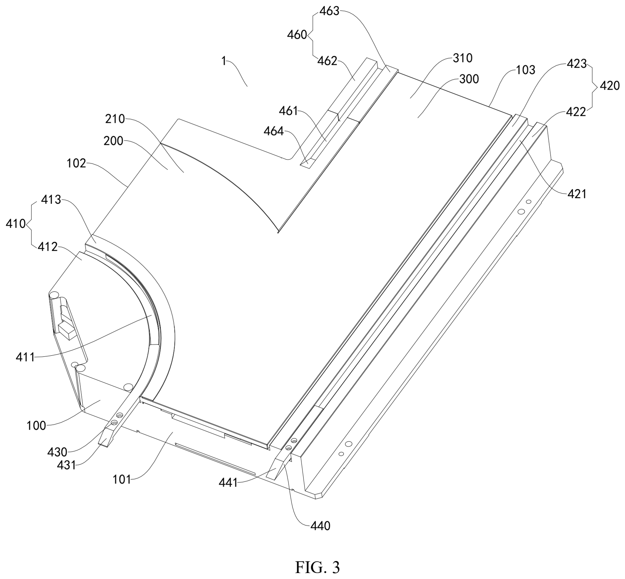

In some embodiments, as shown in FIGS. 3, 5 and 6, the first retractable member 430 is arranged adjacent to the converging end 101, and the second retractable member 440 is arranged adjacent to the converging end 101. in other words, in an extension direction of the first slot 411, the distance between the first retractable member 430 and the converging end 101 is less than the distance between the first retractable member 430 and the first diverging end 102; and in an extension direction of the second slot 421, the distance between the second retractable member 440 and the converging end 101 is less than the distance between the second retractable member 440 and the second diverging end 103.

In this way, when the mover 2 moves to a position near the converging end 101 (for example, when the mover 2 still moves on a track stator 4 connected to the converging end 101, or when the mover 2 just moves to the converging end 101 of the track-switching stator 1), the first retractable member 430 or the second retractable member 440 can come into contact with the mover 2 to apply an acting force to the mover 2. This allows the force acting on the mover 2 to be applied earlier, which helps to drive the mover 2 more stably toward the first conveying track 200 or the second conveying track 300, thereby improving the movement stability of the mover 2.

In some embodiments, the aforementioned first retractable member 430 is arranged at the bottom and/or on a wall of the first slot 411. in other words, the first retractable member 430 may be mounted at the bottom of the first slot 411; or, the first retractable members 430 may be mounted on the wall of the first slot 411 (i.e., two opposite side walls of the first slot 411); or, the first retractable members 430 may be mounted both at the bottom of the first slot 411 and on the wall of the first slot 411.

In this way, the relative positions of the first retractable member 430 and the first guiding member 410 may be defined, and the diversity of arrangements of the first retractable member 430 may be improved making it suitable for different usage scenarios and requirements.

The aforementioned second retractable member 440 is arranged at the bottom and/or on a wall of the second slot 421. in other words, the second retractable member 440 may be mounted at the bottom of the second slot 421; or, the second retractable members 440 may be mounted on the wall of the second slot 421 (i.e., two opposite walls of the second slot 421); or, the second retractable member 440 may be mounted both at the bottom of the second slot 421 and on the wall of the second slot 421.

In this way, the relative positions of the second retractable member 440 and the second guiding member 420 may be defined, and the diversity of arrangements of the second retractable member 440 may be improved, making it suitable for different usage scenarios and requirements.

As shown in FIGS. 3, 5 and 6, a side of the first retractable member 430 facing away from the bottom of the first slot 411 has a first guiding surface 431, and from the converging end 101 to the first diverging end 102, the distance between the first guiding surface 431 and the bottom of the first slot 411gradually increases in the depth direction of the first slot 411. A side of the second retractable member 440 facing away from the bottom of the second slot 421 has a second guiding surface 441, and from the converging end 101 to the second diverging end 103, the distance between the second guiding surface 441 and the bottom of the second slot 421 gradually increases in the depth direction of the second slot 421.

Specifically, when the mover 2 moves from the converging end 101 to the first diverging end 102, the first retractable member 430 is descended, the second retractable member 440 is lifted, the first sliding member 610 of the mover 2 can move freely in the first slot 411, the second sliding member 620 of the mover 2 comes into contact with the second guiding surface 441, and as the mover 2 moves, the size of the second sliding member 620 extending out of the mover 2 gradually decreases until the second sliding member 620 completely moves out of the second slot 421. This ensures high smoothness of movement of the mover 2 and avoids sudden forces that could cause bouncing. At this moment, the displacement stroke of the mover 2 is no longer limited by the second slot 421, and under the cooperation of the first sliding member 610 and the first slot 411, the mover 2 moves in the extension direction of the first slot 411, allowing the mover 2 to move from the converging end 101 to the first diverging end 102.

When the mover 2 moves from the converging end 101 to the second diverging end 103, the first retractable member 430 is lifted, the second retractable member 440 is descended, the second sliding member 620 of the mover 2 can move freely in the second slot 421, the first sliding member 610 of the mover 2 comes into contact with the first guiding surface 431, and as the mover 2 moves, the size of the first sliding member 610 extending out of the mover 2 gradually decreases until the first sliding member 610 completely moves out of the first slot 411. This ensures high smoothness of movement of the mover 2 and avoids sudden forces that could cause bouncing. At this moment, the displacement stroke of the mover 2 is no longer limited by the first slot 411, and under the cooperation of the second sliding member 620 and the second slot 421, the mover 2 moves in the extension direction of the second slot 421, allowing the mover 2 to move from the converging end 101 to the second diverging end 103.

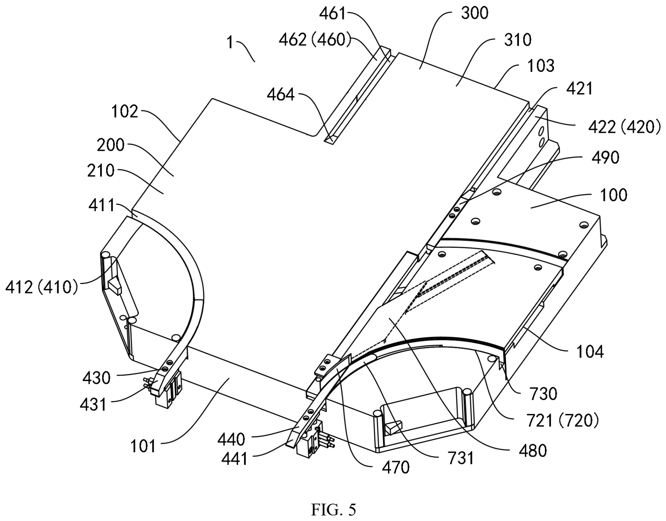

In some embodiments of the present disclosure, as shown in FIG. 5, the first aforementioned guiding member 410 includes a first stop shoulder 412 disposed on the base 100 and located on a side away from the second conveying track 300 in a width direction of the first conveying track 200, and the first stop shoulder 412 and the first conveying track 200 jointly define the first slot 411.

in other words, in the width direction of the first conveying track 200, the first stop shoulder 412 and the first conveying track 200 define the displacement stroke of the first sliding member 610, preventing the mover 2 from detaching from the first conveying track 200 in the width direction of the first conveying track 200, and thereby restricting the mover 2 to move in the extension direction of the first slot 411.

In addition, in the present disclosure, the first conveying track 200 not only is magnetically coupled to the permanent magnet array 6 to drive the mover 2 to move, but also restricts the displacement stroke of the first sliding member 610 in the width direction of the first conveying track 200. The first conveying track 200 integrates different functions without requiring additional limiting components, resulting in fewer parts, a simple structure, and lower cost.

The second guiding member 420 includes a second stop shoulder 422 disposed on the base 100 and located on a side away from the first conveying track 200 in a width direction of the second conveying track 300, and the second stop shoulder 422 and the second conveying track 300 jointly define the second slot 421.
in other words, in the width direction of the second conveying track 300, the second stop shoulder 422 and the second conveying track 300 define the movement stroke of the second sliding member 620, preventing the mover 2 from detaching from the second conveying track 200 in the width direction of the second conveying track 300, and thereby restricting the mover 2 to move in the extension direction of the second slot 421.

In addition, in the present disclosure, the second conveying track 300 not only is magnetically coupled to the permanent magnet array 6 to drive the mover 2 to move, but also restricts the displacement stroke of the second sliding member 620 in the width direction of the second conveying track 300. The second conveying track 300 integrates different functions without requiring additional limiting components, resulting in fewer parts, a simple structure, and lower cost.

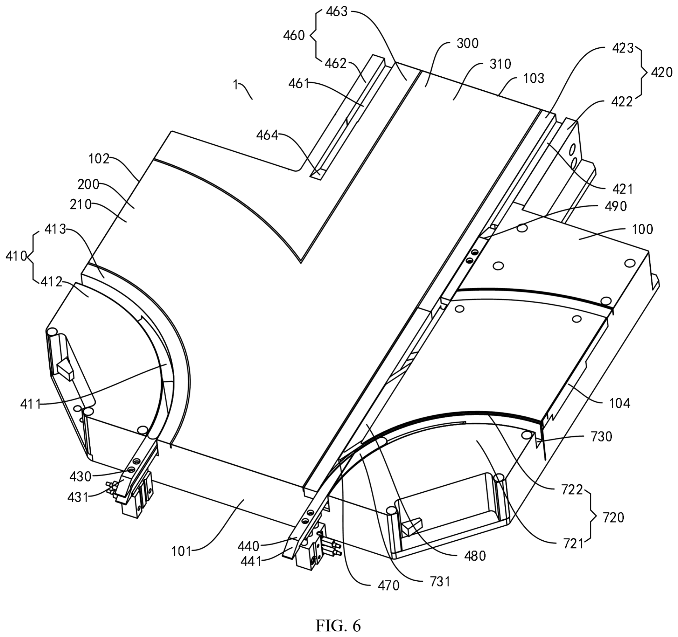

In some other embodiments of the present disclosure, as shown in FIGS. 3 and 6, the first guiding member 410 includes a first stop shoulder 412 and a first abutment shoulder 413, the first stop shoulder 412 is disposed on the base 100 and located on the side away from the second conveying track 300 in the width direction of the first conveying track 200, the first abutment shoulder 413 is located between the first stop shoulder 412 and the first conveying track 200, and the first stop shoulder 412 and the first abutment shoulder 413 jointly define the first slot 411.

In other words, in the width direction of the first conveying track 200, the first stop shoulder 412 and the first abutment shoulder 413 define the displacement stroke of the first sliding member 610, preventing the mover 2 from detaching from the first conveying track 200 in the width direction of the first conveying track 200, and thereby restricting the mover 2 to move in the extension direction of the first slot 411.

In addition, the first abutment shoulder 413 can separate the first sliding member 610 from the first conveying track 200, preventing direct contact between the first sliding member 610 and the first conveying track 200. This reduces the probability of friction on the first conveying track 200 and consequently lowers the risk of damage to a first integrated circuit board in the first conveying track 200, thereby prolonging the service life of the first conveying track 200.

As shown in FIGS. 3 and 6, the second guiding member 420 includes a second stop shoulder 422 and a second abutment shoulder 423, the second stop shoulder 422 is disposed on the base 100 and located on the side away from the first conveying track 200 in the width direction of the second conveying track 300, the second abutment shoulder 423 is located between the second stop shoulder 422 and the second conveying track 300, and the second stop shoulder 422 and the second abutment shoulder 423 jointly define the second slot 421.

In other words, in the width direction of the second conveying track 300, the second stop shoulder 422 and the second abutment shoulder 423 define the displacement stroke of the second sliding member 620, preventing the mover 2 from detaching from the second conveying track 300 in the width direction of the second conveying track 300, and thereby restricting the mover 2 to move in the extension direction of the second slot 421.

In addition, the second abutment shoulder 423 can separate the second sliding member 620 from the second conveying track 300, preventing direct contact between the second sliding member 620 and the second conveying track 300. This reduces the probability of friction on the second conveying track 300 and consequently lowers the risk of damage to a second integrated circuit board in the second conveying track 300, thereby prolonging the service life of the second conveying track 300.

As shown in FIGS. 2-6, the aforementioned first guiding member 410 is located on the side away from the second conveying track 300 in the width direction of the first conveying track 200. The second guiding member 420 is located on the side away from the first conveying track 200 in the width direction of the second conveying track 300.

In this way, the first guiding member 410 is separated from the second conveying track 300 by the first conveying track 200, such that the first sliding member 610, when moving along the first slot 411, cannot be hindered by the second conveying track 300, making the guidance of the first slot 411 on the first sliding member 610 more reliable and smoother. Moreover, during installation and removal of the second conveying track 300, there is no need to consider the position of the first guiding member 410, making the assembly and disassembly of the second conveying track 300 more convenient.

The second guiding member 420 is separated from the first conveying track 200 by the second conveying track 300, such that the second sliding member 620, when moving along the second slot 421, cannot be hindered by the first conveying track 200, making guidance of the second slot 421 on the second sliding member 620 more reliable and smoother. Moreover, during installation and removal of the first conveying track 200, there is no need to consider the position of the second guiding member 420, making the assembly and disassembly of the first conveying track 200 more convenient.

Further, as shown in FIGS. 2-6, the center line of the aforementioned first conveying track 200 is a curved line protruding towards the second conveying track 300, and the center line of the second conveying track 300 is a straight line. The track switching stator 1 further includes a third guiding member 460. The third guiding member 460 is arranged on the base 100 and located in a side close to the first conveying track 200 in the width direction of the second conveying track 300, and the third member 460 defines a third slot 461 or the third member 460 and the second conveying track 200 jointly define the third slot 461. When the mover 2 moves along the second conveying track 300, the first sliding member 610 is slidably disposed in the third slot 461.

The first sliding member 610 is inserted into the third slot 461 and slides in an extension direction of the third slot 461, and the third guiding member 460 provides guidance for the first sliding member 610. As a result, the mover 2, when moving along the second conveying track 300, is guided by the second guiding member 420 and the third guiding member 460 from two opposite sides in the width direction of the second conveying track 300, ensuring the movement stability of the mover 2 and making it less likely to deflect relative to the second conveying track 300.

It should be noted that the third guiding member 460 does not extend to a position near the first conveying track 200, preventing the third guiding member 460 from affecting the assembly and disassembly of the first conveying track 200.

In some embodiments of the present disclosure, as shown in FIG. 5, the third aforementioned guiding member 460 includes a third stop shoulder 462 disposed on the base 100 and located on a side close to the first conveying track 200 in the width direction of the second conveying track 300, and the third stop shoulder 462 and the second conveying track 300 jointly define the third slot 461.

In other words, in the width direction of the second conveying track 300, the third stop shoulder 462 and the second conveying track 300 define the displacement stroke of the first sliding member 610, preventing the mover 2 from detaching from the second conveying track 300 in the width direction of the second conveying track 300 and thereby restricting the mover 2 to move in the extension direction of the third slot 461.

In addition, in the present disclosure, the second conveying track 300 not only can be magnetically coupled to the permanent magnet array 6 to drive the mover 2 to move, but also defines the displacement stroke of the first sliding member 610 in the width direction of the second conveying track 300. The second conveying track 300 integrates different functions without requiring additional resulting in fewer parts, a simple structure, and lower cost.

In some other embodiments of the present disclosure, as shown in FIGS. 3 and 6, the aforementioned third guiding member 460 includes a third stop shoulder 462 and a third abutment shoulder 463, the third stop shoulder 462 is disposed on the base 100 and located on the side close to the first conveying track 200 in the width direction of the second conveying track 300, the third abutment shoulder 463 is located between the third stop shoulder 462 and the second conveying track 300, and the third stop shoulder 462 and the third abutment shoulder 463 jointly define the third slot 461.

In other words, in the width direction of the second conveying track 300, the third stop shoulder 462 and the third abutment shoulder 463 define the displacement stroke of the first sliding member 610, preventing the mover 2 from detaching from the second conveying track 300 in the width direction of the second conveying track 300 and thereby restricting the mover 2 to move in the extension direction of the third slot 461.

In addition, the third abutment shoulder 463 can separate the first sliding member 610 from the second conveying track 300, preventing direct contact between the first sliding member 610 and the second conveying track 300. This reduces the probability of friction on the second conveying track 300 and consequently lowers the risk of damage to the second integrated circuit board in the second conveying track 300, thereby prolonging the service life of the second conveying track 300.

As shown in FIGS. 3, 5 and 6, the wall of a side of the third slot 461 away from the second diverging end 103 has a third guiding surface 464, and from the converging end 101 to the second diverging end 103, the distance between the third guiding surface 464 and the bottom of the third slot 461 gradually decreases.

When the mover 2 moves from the second diverging end 103 to the converging end 101, the first sliding member 610 of the mover 2 extends into the third slot 461, and the second sliding member 620 of the mover 2 extends into the second slot 421. When the mover 2 moves to the side of the third slot 461 away from the second diverging end 103, the first sliding member 610 needs to retract to avoid jamming with the first conveying track 200. By arranging the third guiding surface 464, the first sliding member 610 can gradually retract, and this retraction process is more stable, thereby preventing sudden forces on the first sliding member 610 that could cause the mover 2 to bounce.

Since the third guiding surface 464 is arranged on the wall of the side of the third slot 461 away from the second diverging end 103, the third guiding surface 464 and the wall of the third slot 461 form an integrated structure. This reduces the probability of relative positional changes between the third guiding surface 464 and the wall of the third slot 461, and improves the precision of the arrangement between the third guiding surface 464 and the wall of the third slot 461.

A detachable stop block (not shown in the figure) is disposed in the aforementioned third slot 461 and located on the side of the third slot 461 away from the second diverging end 103. A side of the stop block facing away from the bottom of the third slot 461 has the third guiding surface 464. From the converging end 101 to the second diverging end 103, the distance between the third guiding surface 464 and the bottom of the third slot 461 gradually decreases.

When the mover 2 moves from the second diverging end 103 to the converging end 101, the first sliding member 610 of the mover 2 extends into the third slot 461, and the second sliding member 620 of the mover 2 extends into the second slot 421. When the mover 2 moves to the side of the third slot 461 away from the second diverging end 103, the first sliding member 610 needs to retract to avoid jamming with the first conveying track 200. The third guiding surface 464 is arranged to enable the first sliding member 610 to gradually retract, and this retraction process is more stable, thereby preventing sudden forces on the first sliding member 610 that could cause the mover 2 to bounce.

Since the stop block is arranged on the third guiding surface 464 and detachably connected to the third slot 461, the stop block is an optional component. Therefore, when the track switching stator 1 does not need to control the mover 2 to move from the second diverging end 103 to the converging end 101, the stop block does no need to be installed in the third slot 461, reducing costs and improving the applicability of the track switching stator 1.

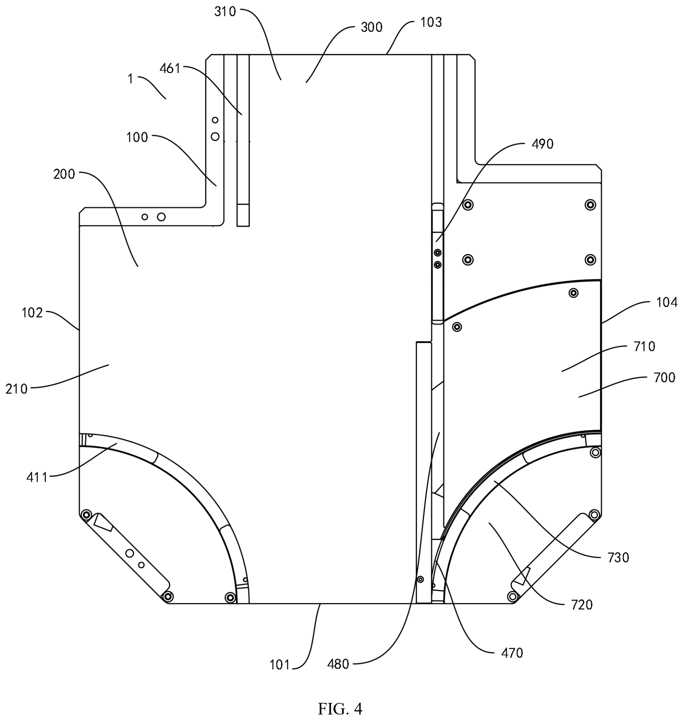

As shown in FIGS. 4-6, the center line of the first conveying track 200 is a curved line protruding towards the second conveying track 300, a center line of the first slot 411 is a curved line protruding towards the second conveying line 300, and the center of the center line of the first conveying track 200 coincides with the center of the center line of the first slot 411.

When the mover 2 moves between the converging end 101 and the first diverging end 102, the first sliding member 610 moves along the first slot 411. Since the center of the center line of the first conveying track 200 coincides with the center of the center line of the first slot 411, it ensures that the mover 2 always moves along the first conveying track 200. This prevents any deviation between the first conveying track 200 and the mover 2, maximizing the magnetic coupling effect between them and improving the utilization rate of the magnetic field of the first conveying track 200.

As shown in FIGS. 1 and 2, the track stator 4 (a linear stator or an arc stator) of the magnetic drive conveying system 3 has a first end 830 and a second end 840 that are opposite to each other. The first diverging end 102 is suitable for connection to the first end 830 of the track stator 4. The track stator 4 has a first connection slot 810 and a second connection slot 820 which are located on two opposite sides in a width direction of the track stator 4. The first connection slot 810 communicates with the first slot 411. A fourth guiding surface 821 is disposed in the second connection slot 820 and is adjacent to the first diverging end 102. From the second end 840 to the first end 830, the distance between the fourth guiding surface 821 and the bottom of the second connection slot 820 gradually increases gradually.

When the mover 2 moves from the track stator 4 to the first conveying track 200, the first sliding member 610 of the mover 2 extends into the first connection slot 810, and the second sliding member 620 of the mover 2 extends into the second connection slot 820. Since the first conveying track 200 generally only has the first slot 411 in the width direction, the second sliding member 620 may get stuck at a junction between the track stator 4 and the first conveying track 200 due to an end face of the first conveying track 200. By arranging the fourth guiding surface 821, the second sliding member 620 can retract smoothly, ensuring that the mover 2 can move freely between the track stator 4 and the first conveying track 200.

As shown in FIGS. 4-6, the track switching stator 1 also has a third diverging end 104 and further includes a third conveying track 700. The third conveying track 700 is disposed on the base 100 and located between the converging end 101 and the third diverging end 104. The third conveying track 700 includes a third armature winding 710 configured to drive the mover 2 to move between the converging end 101 and the third diverging end 104.

In other words, the track switching stator 1 can direct flow from three diverging ends to the same converging end 101 and from one converging end 101 to three different diverging ends, and the mover 2 achieves divergence in three different directions and confluence from three different directions to the same converging end on the track switching stator 1. The track switching stator 1 may be applied to magnetic drive conveying systems 3 of different design specifications, thereby expanding the application range of the track switching stator 1.

Further, the first conveying track 200 and the third conveying track 700 may be arranged symmetrically or may also be arranged asymmetrically with respect to the second conveying track 300. For example, the shapes of the first conveying track 200 and the third conveying track 700 may differ; or, angles between the first conveying track 200 and the second conveying track 300 as well as between the third conveying track 700 and the second conveying track 300 may be different; or, the first conveying track 200 and the third conveying track 700 may be arranged in a staggered manner in an extension direction of the second conveying track 300.

Further, as shown in FIGS. 4-6, the aforementioned switching structure includes a fourth guiding member 720. The fourth guiding member 720 defines a fourth slot 730, or the fourth guiding member 720 and the third conveying track 700 jointly define a fourth slot 730. The fourth slot 730 is connected to the second slot 421, and a third retractable member 731 that can be extended and retracted is disposed in the fourth slot 730 (the third retractable member 731 extends and retracts along a depth direction of the fourth slot 730). The third retractable member 731, when lifted, acts on the mover 2 through contact with the mover 2 to guide the mover 2 to move from the converging end 101 to the first conveying track 200 or the second conveying track 300.

By arranging the fourth slot 730 to cooperate with the second sliding member 620 of the mover 2, the fourth slot 730 can provide limiting and guiding functions to the mover 2 through the second sliding member 620 while the mover 2 moves along the third conveying track 700.

When the mover 2 moves from the converging end 101 to the first diverging end 102, the third retractable member 731 is lifted, preventing the second sliding member 620 from accidentally getting stuck in the fourth slot 730 that could affect the smoothness of movement of the mover 2. When the mover 2 moves from the converging end 101 to the second diverging end 103, the third retractable member 731 is lifted, preventing the second sliding member 620 from accidentally getting stuck or sliding into the fourth slot 730 that could affect the smoothness of movement of the mover 2. In this way, it is ensured that the movement trajectory of the mover 2 is as intended.

When the mover 2 moves from the converging end 101 to the third diverging end 104, the first retractable member 430 is lifted, guiding the first sliding member 610 out of the first slot 411, and the second retractable member 440 and the third retractable member 731 are descended, allowing the second sliding member 620 to slide into the fourth slot 730 from the second slot 421, thereby enabling the mover 2 to move from the converging end 101 to the third diverging end 104.

Furthermore, as shown in FIGS. 4-6, the fourth guiding member 720 is located on a side away from the second conveying track 300 in a width direction of the third conveying track 700.

In this way, the fourth guiding member 720 and the second conveying track 300 are kept a long distance away from each other and separated by the third conveying track 700, ensuring that there is no interference between the fourth guiding member 720 and the second conveying track 300. This not only facilitates the assembly and disassembly of the second conveying track 300, but also allows for the fourth guiding member 720 to limit the second sliding member 620 without needing to avoid the second conveying track 300, resulting in smoother movement of the mover 2 moves on the third conveying track 700.

As shown in FIGS. 4-6, a fourth retractable member 470 that can be extended and retracted is disposed in the second slot 421 (the fourth retractable member 470 extends and retracts in the depth direction of the second slot 421), and the fourth retractable member 470 extends in an extension direction of a wall of the fourth slot 730 away from the second diverging end 103. The fourth retractable member 470, when lifted, acts on the mover 2 through contact with the mover 2 to guide the mover 2 to move from the converging end 101 to the third conveying track 700.

For example, when a center line of the third conveying track 700 is a curved line protruding towards the second conveying track 300, a center line of the fourth slot 730 is a curved line protruding towards the second conveying track 300, the center of the center line of the third conveying track 700 coincides with the center of the center line of the fourth slot 730, and a wall of the fourth slot 730 away from the converging end 101 and the fourth retractable member 470 extend along a curved line. When the center line of the third conveying track 700 is a straight line, the center line of the fourth slot 730 is also a straight line, and the wall of the fourth slot 730 away from the converging end 101 and the fourth retractable member 470 extend along a straight line.

In addition, the second retractable member 440 may be positioned closer to the second diverging end 103 relative to the fourth retractable member 470. In this case, when the mover 2 moves from the converging end 101 to the first diverging end 102 or the second diverging end 103, the fourth retractable member 470 retracts; and when the mover 2 moves from the converging end 101 to the third diverging end 104, the fourth retractable member 470 is lifted, the first retractable member 430 is lifted, the second retractable member 440 is lifted or retract, without considering the extended and retracted states of the second retractable member 440.

Alternatively, the fourth retractable member 470 may be positioned closer to the second diverging end 103 relative to the second retractable member 440. In this case, when the mover 2 moves from the converging end 101 to the first diverging end 102, the fourth retractable member 470 retracts, and the second retractable member 440 is lifted; hen the mover 2 moves from the converging end 101 to the second diverging end 103, the fourth retractable member 470 retracts, and the second retractable member 440 retracts; when the mover 2 moves from the converging end 101 to the third diverging end 104, the fourth retractable member 470 is lifted, the first retractable member 430 is lifted, and the second retractable member 440 retracts.

Specifically, when the mover 2 moves from the converging end 101 to the third diverging end 104, the fourth retractable member 470 is lifted, the second retractable member 620 moves to the fourth retractable member 470 along the second slot 421. Guided by the fourth retractable member 470, the second sliding member 620 moves into the fourth slot 730, the first retractable member 430 is lifted, and the first sliding member 610 of the mover 2 comes into contact with the first guiding surface 431. As the mover 2 moves, the size of the first sliding member 610 extending out of the mover 2 gradually decreases until the first sliding member 610 completely moves out of the first slot 411, at this moment, the displacement stroke of the mover 2 is no longer limited by the first slot 411, and with the cooperation of the second sliding member 620, the fourth slot 730, and the fourth retractable member 470, the mover 2 moves in an extension direction of the fourth slot 730, enabling the mover 2 to move from the converging end 101 to the third diverging end 104.

As shown in FIGS. 4-6, a fifth retractable member 480 that can be extended and retracted is disposed in the second slot 421, and in a direction from the converging end 101 to the second diverging end 103, the second retractable member 440, the fourth retractable member 470 and the fifth retractable member 480 are arranged in sequence. The second retractable member 440, the fourth retractable member 470 and the fifth retractable member 480, when lifted, all act on the mover 2 through contact with the mover 2 to guide the mover 2 to move from the converging end 101 to the first conveying track 200.

Due to the arrangement of the fourth retractable member 470, the size of the second retractable member 440 in the extension direction of the second slot 421 is decreased. Therefore, by additionally arranging the fifth retractable member 480, the second sliding member 620 gradually retracts under the guidance of the second guiding surface 441 when the second retractable member 440, the fourth retractable member 470 and the fifth retractable member 480 are lifted. During the movement of the mover 2 from the converging end 101 to the first diverging end 102, the second sliding member 620 is in contact with top surfaces of the second retractable member 440, the fourth retractable member 470 and the fifth retractable member 480, maintaining a retracted state. This prevents the second sliding member 620 from getting stuck in the second slot 421 and ensures the smoothness of movement of the mover 2.

As shown in FIGS. 4-6, a sixth retractable member 490 that can be extended and retracted is disposed in the second slot 421. When the mover 2 moves between the second conveying track 300 and the third conveying track 700, the sixth retractable member 490 is lifted.

When the mover 2 moves between the second conveying track 300 and the third conveying track 700, the second sliding member 620 is located in the fourth slot 730, the first sliding member 610 retracts relative to the mover 2 under the action of the first guiding surface 431. However, the first sliding member 610 needs to pass through the second conveying track 300, the sixth retractable member 490 is lifted, and the first sliding member 610 comes into contact with the sixth retractable member 490 when passing through the second conveying track 300. Specifically, the sixth retractable member 490 is configured to support the first sliding member 610, preventing the first sliding member 610 from extending and inserting into the second slot 421, thereby ensuring the smoothness of movement of the mover 2 between the second conveying track 300 and the third conveying track 700.

In summary, when the track switching stator 1 includes the first conveying track 200, the second conveying track 300 and the third conveying track 700 and has the first retractable member 430, the second retractable member 440, the third retractable member 731, the fourth retractable member 470, the fifth retractable member 480 and the sixth retractable member 490, the operating state of the track switching stator 1 is switched as follows:

When the mover 2 moves between the converging end 101 and the first diverging end 102, the first retractable member 430 is descended, the second retractable member 440, the third retractable member 731, the fourth retractable member 470 and the fifth retractable member 480 are all lifted, and the sixth retractable member 490 may be descended or lifted.

When the mover 2 moves between the converging end 101 and second diverging end 103, the first retractable member 430 is lifted, and the second retractable member 440, the third retractable member 731, the fourth retractable member 470, the fifth retractable member 480 and the sixth retractable member 490 are all descended.

When the mover 2 moves between the converging end 101 and the third diverging end 104, the first retractable member 430, the fourth retractable member 470 and the sixth retractable member 490 are all lifted, the second retractable member 440 and the third retractable member 731 both are descended, and the fifth retractable member 480 may be descended or lifted.

In some embodiments of the present disclosure, as shown in FIG. 5, the aforementioned fourth guiding member 720 includes a fourth stop shoulder 721 disposed on the base 100 and located on the side away from the second conveying track 300 in the width direction of the third conveying track 700, and the fourth stop shoulder 721 and the third conveying track 700 jointly define the fourth slot 730.

By arranging the fourth stop shoulder 721, when the second sliding member 620 is located in the fourth slot 730, the maximum distance that the second sliding member 620 can move away from the second conveying track 300 in the width direction of the third conveying track 700 may be limited, thereby preventing the mover 2 from detaching from the third conveying track 700.

Due to the fourth stop shoulder 721 and the third conveying track 700 jointly defining the fourth slot 730, the third conveying track 700 not only drives the mover 2 to move, but also limits the movement of the mover 2 in the width direction of the third conveying track 700. This allows for reuse of the third conveying track 700, reducing the number of parts, lowering the structural complexity, cutting cost, and improving the production efficiency.

In some other embodiments of the present disclosure, as shown in FIG. 6, the aforementioned fourth guiding member 720 includes a fourth stop shoulder 721 and a fourth abutment shoulder 722, the fourth stop shoulder 721 is disposed on the base 100 and located on the side away from the second conveying track 300 in the width direction of the third conveying track 700, the fourth abutment shoulder 722 is located between the fourth shoulder 721 and the third conveying track 700, and the fourth stop shoulder 721 and the fourth abutment shoulder 722 jointly define the fourth slot 730.

By arranging the fourth stop shoulder 721, when the second sliding member 620 is located in the fourth slot 730, the maximum distance that the second sliding member 620 can move away from the second conveying track 300 in the width direction of the third conveying track 700 may be limited, thereby preventing the mover 2 from detaching from the third conveying track 700.

By arranging the fourth abutment shoulder 722, the second sliding member 620, when located in the fourth slot 730, may be separated from the third conveying track 700, preventing surface frictional contact between the second sliding member 620 and the third conveying track 700, which prolongs the service life of the third conveying track 700 and better protects a third integrated circuit board in the third conveying track 700.

In some embodiments of the present disclosure, as shown in FIGS. 4-6, the center line of the third conveying track 700 is a curved line protruding towards the second conveying track 300. Therefore, when the mover 2 moves along the third conveying track 700, the radius corresponding to the movement trajectory of the first sliding member 610 is different from the radius corresponding to the movement trajectory of the second sliding member 620. To reduce the risk of the mover 2 getting stuck, no slot is formed in the side of the third conveying track 700 facing the second conveying track 300, in other words, when the mover 2 moves along the third conveying track 700, it is necessary to limit the second sliding member 620 but not the first sliding member 610.

In some embodiments of the present disclosure, the aforementioned first guiding member 410, the second guiding member 420, the third guiding member 460, the fourth guiding member 720 and the base 100 are configured as an integrated structure, such that the connection strength among the first guiding member 410, the second guiding member 420, the third guiding member 460 and the base 100 is high, and they can be formed in a single mold, facilitating production.

In some embodiments of the present disclosure, the base 100 has a mounting groove, and the first conveying track 200, the second conveying track 300 and the third conveying track 700 are disposed in the mounting groove. In this way, the overall size of the base 100, the first conveying track 200, the second conveying track 300 and the third conveying track 700 in a thickness direction of the base 100 may be reduced, thereby reducing the size of the track switching stator 1 in the thickness direction of the base 100 and aiding in lightweight and thin designs of the track switching stator 1. In addition, the positions of the first conveying track 200, the second conveying track 300 and the third conveying track 700 relative to the base 100 may be fixed through the mounting groove, thereby improving the structural stability of the track switching stator 1.

In some embodiments of the present disclosure, the base 100 is of an integrated structure and provided with a mounting groove, the first conveying track 200, the second conveying track 300 and the third conveying track 700 are disposed in the same mounting groove, and in this case, the first conveying track 200, the second conveying track 300 and the third conveying track 700 may be configured as an integrated structure or separate structures, resulting in higher structural strength of the base 100 and facilitating mold release and shaping.

In some other embodiments of the present disclosure, the base 100 includes a first base and a second base that are detachably connected, the first conveying track 200 and the second conveying track 300 are arranged on the first base, and the third conveying track 700 is arranged on the second base.

The first base and the second base can each be provided with a mounting groove. The first conveying track 200 and the second conveying track 300 are mounted in the mounting groove of the first base, and the third conveying track 700 is mounted in the mounting groove of the second base.

When the first base and the second base are assembled together, the track switching stator 1 can diverge the mover 2 from the converging end 101 to three directions: namely the first diverging end 102, the second diverging end 103 and the third diverging end 104, and can also converge the mover 2 from the first diverging end 102, the second diverging end 103 and the third diverging end 104 to the converging end 101.

When the first base and the second base are separated, the track switching stator 1 can diverge the mover 2 from the converging end 101 to two directions: namely the first diverging end 102 and the second diverging end 103, and can also converge the mover 2 from the first diverging end 102 and the second diverging end 103 to the converging end 101.

In this way, the track switching stator 1 has higher structural flexibility and can adapt to different working conditions.

As shown in FIGS. 4-6, the center line of the aforementioned first conveying track 200 is a curved line protruding towards the second conveying track 300, and the center line of the second conveying track 300 is a straight line. This ensures that the mover 2 moves smoothly on the first conveying track 200 and allows for a quicker change in movement direction through the first conveying track 200.

The center line of the third conveying track 700 is a curved line protruding towards the second conveying track 300, which ensures that the mover 2 moves smoothly on the third conveying track 700 and allows for a quicker change in movement direction through the third conveying track 700.

The third conveying track 700 and the first conveying track 200 are located on two opposite sides of the second conveying track 300. For example, an end face of the first diverging end 102 is parallel to an end face of the third diverging end 104, and an end face of the second diverging end 103 is parallel to an end face of the converging end 101. In addition, the end faces of the first diverging end 102 and the third diverging end 104 are perpendicular to the end faces of the second diverging end 103 and the converging end 101.

In this way, the arrangement of the first conveying track 200, the second conveying track 300 and the third conveying track 700 does not interfere with each other, enabling the mover 2 to be quickly conveyed in different directions.

As shown in FIGS. 4-6, an extension line of the aforementioned converging end 101 passes through the center of the first conveying track 200, which helps ensure that the end face of the first diverging end 102 is perpendicular to the end face of the converging end 101. This allows the mover 2 to switch more quickly when passing through the first conveying track 200, and reduces the likelihood of deviation or derailment when the mover 2 moves along the first conveying track 200.

The extension line of the converging end 101 passes through the center of the third conveying track 700, which helps ensure that the end face of the third diverging end 104 is perpendicular to the end face of the converging end 101. This allows the mover 2 to switch more quickly when passing through the third conveying track 700, and reduces the likelihood of problems such as deviation or derailment when the mover 2 moves along the third conveying track 700.

The aforementioned first conveying track 200 is a first integrated circuit board, the second conveying track 300 is a second integrated circuit board, and the third conveying track 700 is a third integrated circuit board. The first integrated circuit board, the second integrated circuit board and the third integrated circuit board are configured as separate structures or an integrated structure.

The first armature winding 210 may be integrated into the first integrated circuit board through a print process, the second armature winding 310 may be integrated into the second integrated circuit board through a print process, and the third armature winding 710 may be integrated into the third integrated circuit board through a print process.

When the first integrated circuit board, the second integrated circuit board and the third integrated circuit board are configured as an integrated structure, the first integrated circuit board, the second integrated circuit board and the third integrated circuit board are synchronously disassembled from or assembled onto the base 100. This reduces the number of disassembly steps, and improves production efficiency. The integrated structure of the first integrated circuit board, the second integrated circuit board and the third integrated circuit board is more convenient for storage during transportation, and mold release of the three circuit boards is easier.

When the first integrated circuit board, the second integrated circuit board and the third integrated circuit board are configured as separate structures, only the first integrated circuit board, when damaged, needs to be replaced without the need to replate the second integrated circuit board and the third integrated circuit board; only the second integrated circuit board, when damaged, needs to be replaced without the need to replace the first integrated circuit board and the third integrated circuit board; and similarly, only the third integrated circuit board, when damaged, needs to be replaced without the need to replace the first integrated circuit board and the second integrated circuit board, which can reduce subsequent maintenance cost. In addition, during installation, the first integrated circuit board, the second integrated circuit board and the third integrated circuit board may adapt more easily to the shape of the base 100, lowering the installation difficulty. The first integrated circuit board, the second integrated circuit board and the third integrated circuit board may be assembled and disassembled freely, providing greater flexibility for arrangement.

In some embodiments of the present disclosure, when the first integrated circuit board, the second integrated circuit board and the third integrated circuit board are of an integrated structure, they are located below the base 100 and configured as an integrated flat plate.

In this way, not only can integrated molding of the first integrated circuit board, the second integrated circuit board and the third integrated circuit board be realized, but also a flat plate structure is created after molding of the first integrated circuit board, the second integrated circuit board and the third integrated circuit board, which is regular in shape, easy to produce, and convenient for transportation and storage.

In some other embodiments of the present disclosure, when the first integrated circuit board, the second integrated circuit board and the third integrated circuit board are configured as an integrated structure, they are located above the base 100, with a portion of the second integrated circuit board located in the second slot 421, and/or a portion of the third integrated circuit board located in the second slot 421.

In other words, a portion of the second integrated circuit board is located in the second slot 421; or, a portion of the third integrated circuit board is located in the second slot 421; or, a portion of the second integrated circuit board and a portion of the third integrated circuit board are both located in the second slot 421.

In this way, not only can integrated molding of the first integrated circuit board, the second integrated circuit board and the third integrated circuit board be realized, but also the first integrated circuit board, the second integrated circuit board and the third integrated circuit board are closer to the mover 2 after molding, which facilitates the increase of the driving force applied by the track switching stator 1 on the mover 2. In addition, since a portion of the first integrated circuit board, a portion of the second integrated circuit board and a portion of the third integrated circuit board after molding are located in the second slot 421, which helps the first integrated circuit board, the second integrated circuit board and the third integrated circuit board after molding to avoid the second sliding member 620 of the mover 2, thereby ensuring the smoothness of movement of the mover 2.

At least one of the first slot 411 and the second slot 421 is provided with an electromagnetic steering driving member arranged adjacent to the converging end 101. The electromagnetic steering driving member acts on the mover 2 in a non-contact manner to guide the mover 2 to move from the converging end 101 to the first conveying track 200 or guide the mover 2 from the converging end 101 to the second conveying track 300.

Specifically, a permanent magnet array magnetically coupled to the electromagnetic steering driving member is arranged on a side surface of the mover 2, and the permanent magnet array may be configured as a second permanent magnet array. The electromagnetic steering driving member, when energized, is magnetically coupled to the second permanent magnet array. By changing a current direction of the electromagnetic steering driving member, a magnetic attractive force or a magnetic repulsive force is generated between the electromagnetic steering driving member and the second permanent magnet array to drive the mover 2 to move from the converging end 101 to the first diverging end 102 or to drive the mover 2 to move from the converging end 101 to the second diverging end 103.

It thus can be seen that the electromagnetic steering driving member can assist in adjusting the movement direction of the mover 2. Moreover, since the electromagnetic steering driving member is located on the side surface of the mover 2, its magnetic field has a minimal impact on the permanent magnet array 6 located below the mover 2, thereby having a negligible effect on the magnetic coupling between the permanent magnet array 6 of the mover and the first armature winding 210 as well as the second armature winding 310. This ensures the movement stability of the mover 2 along the first conveying track 200 and the second conveying track 300.

Certainly, those skilled in the art can understand that the switching structure may be provided with the electromagnetic steering driving member, the first retractable member 430 and the second retractable member 440 simultaneously.

The aforementioned track switching stator 1 is in at least one of the following configurations:
Configuration 1: a first limiting member is arranged on an inner wall of the first slot 411, located close to at least one of the converging end 101 and the first diverging end 102, and configured to limit the displacement stroke of the mover 2 in the depth direction of the first slot 411.

For example, the length of the first limiting member may be the same as that of the first slot 411; or, the first limiting member can be divided into two parts, one part is located close to the converging end 101, and the other part is located close to the first diverging end 102. By arranging the first limiting member, the mover 2 can be prevented from bouncing at the converging end 101 or the first diverging end 102 in a way close to one side of the first slot 411, in other words, the mover 2 is prevented from bouncing at junctions between the track switching stator 1 and other track stators 4 of the magnetic drive conveying system 3.

Configuration 2: a second limiting member is arranged on an inner wall of the second slot 421, located close to at least one of the converging end 101 and the second diverging end 103, and configured to limit the displacement stroke of the mover 2 in the depth direction of the second slot 421.

For example, the length of the second limiting member may be the same as that of the second slot 421; or, the second limiting member is divided into two parts, one part is located close to the converging end 101, and the other part is located close to the second diverging end 103. By arranging the second limiting member, the mover 2 can be prevented from bouncing at the converging end 101 or the second diverging end 103 in a way close to one side of the second slot 421, in other words, the mover 2 is prevented from bouncing at junctions between the track switching stator 1 and other track stators 4 of the magnetic drive conveying system 3.

Configuration 3: a third limiting member is arranged on an inner wall of the third slot 461, located close to the converging end 101 and the second diverging end 103, and configured to limit the displacement stroke of the mover 2 in the depth direction of the third slot 461.

For example, the length of the third limiting member may be the same as that of the third slot 461; or, the third limiting member is divided into two parts, one part is located close to the converging end 101, and the other part is located close to the second diverging end 103. By arranging the third limiting member, the mover 2 can be prevented from bouncing at the second diverging end 103 in a way close to one side of the third slot 461, in other words, the mover 2 is prevented from bouncing at junctions between the track switching stator 1 and other track stators 4 of the magnetic drive conveying system 3.

Configuration 4: a fourth limiting member is arranged on an inner wall of the fourth slot 730, located close to the converging end 101 and the third diverging end 104, and configured to limit the displacement stroke of the mover 2 in the depth direction of the fourth slot 730.

For example, the length of the fourth limiting member may be the same as that of the fourth slot 730; or, the fourth limiting member is divided into two parts, one part is located close to the converging end 101, and the other part is located close to the third diverging end 104. By arranging the fourth limiting member, the mover 2 can be prevented from bouncing at the converging end 101 or the third diverging end 104 in a way close to one side of the fourth slot 730, in other words, the mover 2 is prevented from bouncing at junctions between the track switching stator 1 and other track stators 4 of the magnetic drive conveying system 3.

In some embodiments of the present disclosure, a first limiting groove and a second limiting groove may be formed in two opposite side surfaces of the mover 2. When the mover 2 moves along the first conveying track 200, the first limiting member is inserted into the first limiting groove. When the mover 2 moves along the second conveying track 300, the second limiting member is inserted into the second limiting groove, and the third limiting member is inserted into the first limiting groove. When the mover 2 moves along the third conveying track 700, the fourth limiting member is inserted into the second limiting groove.

In some other embodiments of the present disclosure, when the mover 2 moves along the first conveying track 200, the first limiting member is located above the first sliding member 610 and limits the first sliding member 610 in the depth direction of the first slot 411. When the mover 2 moves along the second conveying track 300, the second limiting member is located above the second sliding member 620 and limits the second sliding member 620 in the depth direction of the second slot 421, and the third limiting member is located above the first sliding member 610 and limits the first sliding member 610 in the depth direction of the third slot 461. When the mover 2 moves along the third conveying track 700, the fourth limiting member is located above the second sliding member 620 and limits the second sliding member 620 in the depth direction of the fourth slot 730.

In a second aspect, as shown in FIGS. 1-7, an embodiment of the present disclosure provides a magnetic drive conveying system 3, including:
the track switching stator 1 mentioned above; and
a mover 2, provided with a permanent magnet array 6 and retractable universal wheels (which may be the first sliding member 610 and the second sliding member 620 mentioned above), where the retractable universal wheel can be extended and retracted relative to the mover 2, and the switching structure guides the mover 2 to move from the converging end 101 to the first conveying track 200 or guides the mover 2 to move from the converging end 101 to the second conveying track 300 by adjusting the extended and retracted states of the retractable universal wheel.

The first armature winding 210, when energized, is magnetically coupled to the permanent magnet array 6 to drive the mover 2 to move between the converging end 101 and the first diverging end 102; the second armature winding 310, when energized, is magnetically coupled to the permanent magnet array 6 to drive the mover 2 to move between the converging end 101 and the second diverging end 103.

According to the magnetic drive conveying system 3 in the embodiment of the application, by applying the track switching stator 1 in the magnetic drive conveying system 3, not only can the divergence of a single track or confluence of a plurality of tracks be realized, but also the need for a separate transfer mechanism is eliminated, removing the connection step of the transfer mechanism during each confluence or divergence, thereby improving conveying efficiency.

Further, in some embodiments, a plurality of track switching stators 1 may be arranged in one magnetic drive conveying system 3, with at least two of the track switching stators 1 being adjacent to each other. For the two adjacent track switching stators 1, the converging end 101 of one of the track switching stators 1 is spliced with any one of the converging end 101, the first diverging end 102 and the second diverging end 103 of the other track switching stator 1; or, the first diverging end 102 of one of the track switching stators 1 is spliced with any one of the converging end 101, the first diverging end 102 and the second diverging end 103 of the other track switching stator 1; or, the second diverging end 103 of one of the track switching stators 1 is spliced with any one of the converging end 101, the first diverging end 102 and the second diverging end 103 of the other track switching stator 1.

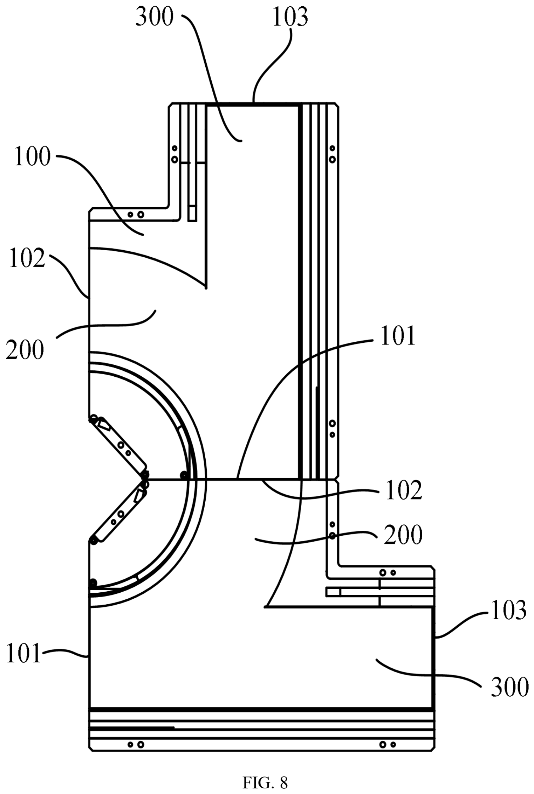

As shown in FIG. 8, when two track switching stators 1 are adjacent to each other, the first diverging end of one of the track switching stators 1 (such as the track switching stator positioned at the bottom in FIG. 8) is spliced with the converging end of the other track switching stator (such as the track switching stator positioned at the top in FIG. 8). The embodiment of the application enhances the conveying diversity and efficiency of the magnetic drive conveying system 3 by arranging at least two adjacent track switching stators 1.

The same or similar reference numerals in the accompanying drawings of the embodiments of the present disclosure correspond to the same or similar components. In the description of the present disclosure, it should be understood that directional or positional relationships indicated by terms such as "upper", "lower", "left" and "right", if any, are based on directional or positional relationships shown in the accompanying drawings. These terms are merely for the convenience of describing and simplifying the description of the present disclosure, do not indicate or imply that devices or elements referred to must have a specific direction or be constructed and operated in a specific direction. Therefore, the terms for describing positional relationships in the drawings are merely for illustrative description and should not be construed as limitations of the application. Those of ordinary skill in the art may appreciate the specific meanings of these terms according to specific circumstances.

The above are merely preferred embodiments of the present disclosure and are not intended to limit the present disclosure. Any modifications, equivalent substitutions and improvements made within the spirit and principles of the present disclosure should all fall within the protection scope of the present disclosure.

## Claims

1. A track switching stator, applied to a magnetic drive conveying system, having a converging end (101), a first diverging end (102) and a second diverging end (103), and comprising:
a base (100);
a first conveying track (200), disposed on the base (100), located between the converging end (101) and the first diverging end (102), and comprising a first armature winding (210) configured to drive a mover (2) of the magnetic drive conveying system to move between the converging end (101) and the first diverging end (102);
a second conveying track (300), disposed on the base (100), located between the converging end (101) and the second diverging end (103), and comprising a second armature winding (310) configured to drive the mover (2) to move between the converging end (101) and the second diverging end (103); and
a switching structure, comprising a first guiding member (410) and a second guiding member (420), wherein
the first guiding member (410) defines a first slot (411), or the first guiding member (410) and the first conveying track (200) jointly define the first slot (411), a first retractable member (430) capable of being extended and retracted is disposed in the first slot (411), the first retractable member (430), when lifted, acts on the mover (2) through contact with the mover (2) to guide the mover (2) to move from the converging end (101) to the second conveying track (300), a side of the first retractable member (430) facing away from the bottom of the first slot (411) has a first guiding surface (431), and from the converging end (101) to the first diverging end (102), the distance between the first guiding surface (431) and the bottom of the first slot (411) gradually increases in a depth direction of the first slot (411); and
the second guiding member (420) defines a second slot (421), or the second guiding member (420) and the second conveying track (300) jointly define the second slot (421), a second retractable member (440) capable of being extended and retracted is disposed in the second slot (421), the second retractable member (440), when lifted, acts on the mover (2) through contact with the mover (2) to guide the mover (2) to move from the converging end (101) to the first conveying track (200), a side of the second retractable member (440) facing away from the bottom of the second slot (421) has a second guiding surface (441), and from the converging end (101) to the second diverging end (103), the distance between the second guiding surface (441) and the bottom of the second slot (421) gradually increases in a depth direction of the second slot (421).

2. The track switching stator according to claim 1, wherein the first retractable member (430) is arranged adjacent to the converging end (101); and
the second retractable member (440) is arranged adjacent to the converging end (101).

3. The track switching stator according to claim 1, wherein the first retractable member (430) is arranged at the bottom and/or on a wall of the first slot (411); and
the second retractable member (440) is arranged at the bottom and/or on a wall of the second slot (421).

4. The track switching stator according to claim 1, wherein the first guiding member (410) comprises a first stop shoulder (412) disposed on the base (100) and located on a side away from the second conveying track (300) in a width direction of the first conveying track (200), and the first stop shoulder (412) and the first conveying track (200) jointly define the first slot (411); and /or
the second guiding member (420) comprises a second stop shoulder (422) disposed on the base (100) and located on a side away from the first conveying track (200) in a width direction of the second conveying track (300), and the second stop shoulder (422) and the second conveying track (300) jointly define the second slot (421).

5. The track switching stator according to claim 1, wherein the first guiding member (410) comprises a first stop shoulder (412) and a first abutment shoulder (413), the first stop shoulder (412) is disposed on the base (100) and located on a side away from the second conveying track (300) in a width direction of the first conveying track (200), the first abutment shoulder (413) is located between the first stop shoulder (412) and the first conveying track (200), and the first stop shoulder (412) and the first abutment shoulder (413) jointly define the first slot (411); and/or
the second guiding member (420) comprises a second stop shoulder (422) and a second abutment shoulder (423), the second stop shoulder (422) is disposed on the base (100) and located on a side away from the first conveying track (200) in a width direction of the second conveying track (300), the second abutment shoulder (423) is located between the second stop shoulder (422) and the second conveying track (300), and the second stop shoulder (422) and the second abutment shoulder (423) jointly define the second slot (421).

6. The track switching stator according to claim 1, wherein the first guiding member (410) is located on a side away from the second conveying track (300) in a width direction of the first conveying track (200); and
the second guiding member (420) is located on a side away from the first conveying track (200) in a width direction of the second conveying track (300).

7. The track switching stator according to claim 6, wherein a center line of the first conveying track (200) is a curved line protruding towards the second conveying track (300), and a center line of the second conveying track (300) is a straight line;
the switching structure further comprises:
a third guiding member (460), located on a side close to the first conveying track (200) in the width direction of the second conveying track (300), the third guiding member (460) is spaced apart from the first conveying track (200) in an extension direction of the second conveying track (300), and the third guiding member (460) defines a third slot (461), or the third guiding member (460) and the second conveying track (300) jointly define the third slot (461).

8. The track switching stator according to claim 7, wherein the third guiding member (460) comprises a third stop shoulder (462) disposed on the base (100) and located on the side close to the first conveying track (200) in the width direction of the second conveying track (300), and the third stop shoulder (462) and the second conveying track (300) jointly define the third slot (461).

9. The track switching stator according to claim 7, wherein the third guiding member (460) comprises a third stop shoulder (462) and a third abutment shoulder (463), the third stop shoulder (462) is disposed on the base (100) and located on the side close to the first conveying track (200) in the width direction of the second conveying track (300), the third abutment shoulder (463) is located between the third stop shoulder (462) and the second conveying track (300), and the third stop shoulder (462) and the third abutment shoulder (463) jointly define the third slot (461).

10. The track switching stator according to claim 7, wherein the first guiding member (410), the second guiding member (420), the third guiding member (460) and the base (100) are configured as an integrated structure.

11. The track switching stator according to claim 7, wherein the wall of a side of the third slot (461) away from the second diverging end (103) has a third guiding surface (464), and from the converging end (101) to the second diverging end (103), the distance between the third guiding surface (464) and the bottom of the third slot (461) gradually decreases in a depth direction of the third slot (461).

12. The track switching stator according to claim 7, wherein a detachable stop block is disposed in the third slot (461) and located on a side of the third slot (461) away from the second diverging end (103), a side of the stop block facing away from the bottom of the third slot (461) has a third guiding surface (464), and from the converging end (101) to the second diverging end (103), the distance between the third guiding surface (464) and the bottom of the third slot (461) gradually decreases in a depth direction of the third slot (461).

13. The track switching stator according to claim 1, wherein a center line of the first conveying track (200) is a curved line protruding towards the second conveying track (300), a center line of the first slot (411) is a curved line protruding towards the second conveying track (300), and the center of the center line of the first conveying track (200) coincides with the center of the center line of the first slot (411).

14. The track switching stator according to claim 1, wherein a track stator (4) of the magnetic drive conveying system has a first end (830) and a second end (840) that are opposite to each other, and the first diverging end (102) is adapted to be connected to the first end (830) of the track stator (4);
the track stator (4) has a first connection slot (810) and a second connection slot (820), in a width direction of the track stator (4), the first connection slot (810) and the second connection slot (820) are located on two opposite sides of the track stator (4), the first connection slot (810) communicates with the first slot (411), and a fourth guiding surface (821) is disposed in the second connection slot (820) and arranged adjacent to the first diverging end (102); and
from the second end (840) to the first end (830), the distance between the fourth guiding surface (821) and the bottom of the second connection slot (820) gradually increases in a depth direction of the second connection slot (820).

15. The track switching stator according to claim 1, wherein base (100) has a mounting groove, and the first conveying track (200) and the second conveying track (300) are disposed in the mounting groove.

16. The track switching stator according to claim 1, wherein the track switching stator (1) further has a third diverging end (104); and
the track switching stator (1) further comprises:
a third conveying track (700), disposed on the base (100), located between the converging end (101) and the third diverging end (104), and comprising a third armature winding (710) configured to drive the mover (2) to move between the converging end (101) and the third diverging end (104).

17. The track switching stator according to claim 16, wherein the switching structure comprises:
a fourth guiding member (720), wherein the fourth guiding member (720) defines a fourth slot (730), or the fourth guiding member (720) and the third conveying track (700) jointly define the fourth slot (730), the fourth slot (730) communicates with the second slot (421), a third retractable member (731) capable of being extended and retracted is disposed in the fourth slot (730), the third retractable member (731), when lifted, acts on the mover (2) through contact with the mover (2) to guide the mover (2) to move from the converging end (101) to the first conveying track (200) or the second conveying track (300).

18. The track switching stator according to claim 17, wherein the fourth guiding member (720) is located on a side away from the second conveying track (300) in a width direction of the third conveying track (700).

19. The track switching stator according to claim 18, wherein a fourth retractable member (470) capable of being extended and retracted is disposed in the second slot (421), the fourth retractable member (470) extends in an extension direction of a wall of the fourth slot (730) away from the third diverging end (104), and the fourth retractable member (470), when lifted, acts on the mover (2) through contact with the mover (2) to guide the mover (2) to move from the converging end (101) to the third conveying track (700).

20. The track switching stator according to claim 19, wherein a fifth retractable member (480) capable of being extended and retracted is disposed in the second slot (421), and in a direction from the converging end (101) to the second diverging end (103), the second retractable member (440), the fourth retractable member (470) and the fifth retractable member (480) are arranged in sequence;
the second retractable member (440), the fourth retractable member (470) and the fifth retractable member (480), when lifted, all act on the mover (2) through contact with the mover (2) to guide the mover (2) to move from the converging end (101) to the first conveying track (200).

21. The track switching stator according to claim 17, wherein a sixth retractable member (490) capable of being extended and retracted is disposed in the second slot (421), and when the mover (2) moves between the second conveying track (300) and the third conveying track (700), the sixth retractable member (490) is lifted.

22. The track switching stator according to claim 17, wherein the fourth guiding member (720) comprises a fourth stop shoulder (721) disposed on the base (100) and located on a side away from the second conveying track (300) in a width direction of the third conveying track (700), and the fourth stop shoulder (721) and the third conveying track (700) jointly define the fourth slot (730).

23. The track switching stator according to claim 17, wherein the fourth guiding member (720) comprises a fourth stop shoulder (721) and a fourth abutment shoulder (722), the fourth stop shoulder (721) is disposed on the base (100) and located on a side away from the second conveying track (300) in a width direction of the third conveying track (700), the fourth abutment shoulder (722) is located between the fourth stop shoulder (721) and the third conveying track (700), and the fourth stop shoulder (721) and the fourth abutment shoulder (722) jointly define the fourth slot (730).

24. The track switching stator according to claim 16, wherein the base (100) is of an integrated structure; or
the base (100) comprises a first base and a second base, the first base and the second base are detachably connected, the first conveying track (200) and the second conveying track (300) are arranged on the first base, and the third conveying track (700) is arranged on the second base.

25. The track switching stator according to claim 16, wherein the first conveying track (200) and the third conveying track (700) are located on two opposite sides of the second conveying track (300); and
a center line of the first conveying track (200) is a curved line protruding towards the second conveying track (300), a center line of the third conveying track (700) is a curved line protruding towards the second conveying track (300), and a center line of the second conveying track (300) is a straight line.

26. The track switching stator according to claim 25, wherein an extension line of the converging end (101) passes through the center of the first conveying track (200); and/or
the extension line of the converging end (101) passes through the center of the third conveying track (700).

27. The track switching stator according to claim 16, wherein the first conveying track (200) is a first integrated circuit board, the second conveying track (300) is a second integrated circuit board, the third conveying track (700) is a third integrated circuit board, and the first integrated circuit board, the second integrated circuit board and the third integrated circuit board are of separate structures or an integrated structure.

28. The track switching stator according to claim 27, wherein the first integrated circuit board, the second integrated circuit board and the third integrated circuit board are located below the base (100) and configured as an integrated flat plate.

29. The track switching stator according to claim 27, wherein the first integrated circuit board, the second integrated circuit board and the third integrated circuit board are located above the base (100), and the second integrated circuit board and the third integrated circuit board are configured as an integrated structure; and
a portion of the second integrated circuit board is located in the second slot (421), and/or a portion of the third integrated circuit board is located in the second slot (421).

30. The track switching stator according to claim 1, wherein at least one of the first slot (411) and the second slot (421) is provided with an electromagnetic steering driving member, and the electromagnetic steering driving member is arranged adjacent to the converging end (101);
the electromagnetic steering driving member acts on the mover (2) in a non-contact manner to guide the mover (2) to move from the converging end (101) to the first conveying track (200) or guide the mover (2) to move from the converging end (101) to the second conveying track (300).

31. The track switching stator according to claim 1, wherein the track switching stator (1) is in at least one of the following configurations:
configuration 1: a first limiting member is arranged on an inner wall of the first slot (411), located close to at least one of the converging end (101) and the first diverging end (102), and configured to limit the displacement stroke of the mover (2) in the depth direction of the first slot (411); and
configuration 2: a second limiting member is arranged on an inner wall of the second slot (421), located close to at least one of the converging end (101) and the second diverging end (103), and configured to limit the displacement stroke of the mover (2) in the depth direction of the second slot (421).

32. The track switching stator according to claim 1, wherein,
when the mover (2) moves from the converging end (101) to the first diverging end (102), the first retractable member (430) is descended, the second retractable member (440) is lifted, a first sliding member (610) of the mover (2) moves freely in the first slot (411), a second sliding member (620) of the mover (2) comes into contact with the second guiding surface (441), as the mover (2) moves, the size of the second sliding member (620) extending out of the mover (2) gradually decreases until the second sliding member (620) completely moves out of the second slot (421), and under the cooperation of the first sliding member (610) and the first slot (411), the mover (2) moves in an extension direction of the first slot (411) to allow the mover (2) to move from the converging end (101) to the first diverging end (102);
when the mover (2) moves from the converging end (101) to the second diverging end (103), the first retractable member (430) is lifted, the second retractable member (440) is descended, the second sliding member (620) of the mover (2) moves freely in the second slot (421), the first sliding member (610) of the mover (2) comes into contact with the first guiding surface (431), as the mover (2) moves, the size of the first sliding member (610) extending out of the mover (2) gradually decreases until the first sliding member (610) completely moves out of the first slot (411), and under the cooperation of the second sliding member (620) and the second slot (421), the mover (2) moves in an extension direction of the second slot (421) to allow the mover (2) to move from the converging end (101) to the second diverging end (103).

33. A magnetic drive conveying system, comprising:
the track switching stator (1) according to any one of claims 1 to 32; and
a mover (2), provided with a permanent magnet array and retractable universal wheels, the retractable universal wheels being capable of being extended and retracted relative to the mover (2), and the switching structure guiding the mover (2) to move from the converging end (101) to the first conveying track (200) or guiding the mover (2) to move from the converging end (101) to the second conveying track (300) by adjusting extended and retracted states of the retractable universal wheels;
the first armature winding (210), when energized, is magnetically coupled to the permanent magnet array to drive the mover (2) to move between the converging end (101) and the first diverging end (102); and
the second armature winding (310), when energized, is magnetically coupled to the permanent magnet array to drive the mover (2) to move between the converging end (101) and the second diverging end (103).

34. The magnetic drive conveying system according to claim 33, wherein a plurality of track switching stators (1) are arranged, at least two of the track switching stators (1) are adjacent to each other, and for two adjacent track-switching stators (1), the connection therebetween is in one of the following configurations:
configuration 1: the converging end (101) of one of the track switching stators (1) is spliced with any one of the converging end (101), the first diverging end (102) and the second diverging end (103) of the other track switching stator (1);
configuration 2: the first diverging end (102) of one of the track switching stators (1) is spliced with any one of the converging end (101), the first diverging end (102) and the second diverging end (103) of the other track switching stator (1); and
configuration 3: the second diverging end (103) of one of the track switching stators (1) is spliced with any one of the converging end (101), the first diverging end (102) and the second diverging end (103) of the other track switching stator (1).
